# EUROPEAN PATENT APPLICATION

(11) **EP 2 018 020 A1**
(43) Date of publication of application: **21.01.2009**
(21) Application number: 08158193.6
(22) Date of filing: 13.06.2008
(51) Int. Cl.: H04L 29/06

(54) **System and method for transmitting information to a mobile device**

(30) Priority: 28.06.2007 US 769899; 02.04.2008 KR 20080030975
(71) Applicant: Samsung Electronics Co., Ltd., Suwon-si, Gyeonggi-do 442-743 (KR)
(72) Inventor: Webb, Ronald J., Gyeonggi-do (KR); Sakhpara, Ketul, Gyeonggi-do (KR)
(74) Representative: Grünecker, Kinkeldey, Stockmair & Schwanhäusser Anwaltssozietät

(57) **Abstract**

The present disclosure relates generally to systems and methods for controlling the presentation of dynamic information to mobile devices. In one example, the method includes receiving status information from a mobile device indicating that the mobile device is available to receive advertisement information (102) and receiving device information from the mobile device identifying at least one device parameter of the mobile device (104). Advertising content to send to the mobile device is identified and access information for the advertising content is embedded in a Session Initiation Protocol (SIP) message that is send to the mobile device (106). The SIP message is generated based at least partly on the device information.

## Description

### BACKGROUND

Advertisers are continually searching for more ways to provide advertising content to potential or current customers. As mobile devices such as mobile telephones and personal digital assistants become more ubiquitous, advertisers often desire to communicate advertising content through such devices. However, current technologies lack efficient ways to accomplish this, and so an improved system and method for controlling mobile device advertisements are needed.

### SUMMARY

In one embodiment, a method comprises receiving status information from a mobile device indicating that the mobile device is available to receive advertisement information. Device information is received from the mobile device identifying at least one device parameter of the mobile device. Advertising content is identified to send to the mobile device. Access information for the advertising content is embedded in a Session Initiation Protocol (SIP) message, wherein the SIP message is generated based at least partly on the device information. The SIP message is sent to the mobile device.

In another embodiment, a method comprises informing a network, by a mobile device, of a presence status of the mobile device. At least one device parameter of the mobile device is sent to the network. Access information is received from the network in a Session Initiation Protocol (SIP) message, wherein the access information identifies advertising content to be accessed by the mobile device. The advertising content is accessed via the access information by a SIP browser on the mobile device. The advertising content is provided to an output component of the mobile device.

In yet another embodiment, a system comprises a mobile device having a wireless network interface, a processor coupled to the wireless network interface, and a memory coupled to the processor and configured to store a plurality of instructions for use by the processor. The instructions include instructions for a Session Initiation Protocol (SIP) browser, instructions for a SIP stack for handling SIP messages, and instructions for a Uniform Resource Locator (URL) engine positioned between the SIP browser and SIP stack and configured to translate URLs received by the SIP stack for the SIP browser. The instructions also include instructions for informing a network of a presence status of the mobile device via the wireless network interface, instructions for receiving access information for advertising content from the network embedded in a SIP message, instructions for using the SIP browser to access the advertising content via the access information, and instructions for providing the advertising content to an output component.

### BRIEF DESCRIPTION OF THE DRAWINGS

Aspects of the present disclosure are best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
Fig. 1 is a flowchart illustrating one embodiment of a method for execution by a mobile device to receive advertising content from a network.
Fig. 2 is a flowchart illustrating one embodiment of a method for sending advertising content to a mobile device.
Fig. 3 is a block diagram of one embodiment of a network within which the method of Fig. 2 may be implemented.
Fig. 4 is one embodiment of a sequence diagram illustrating messages between a mobile device and the network of Fig. 3.
Fig. 5 is a block diagram of one embodiment of a mobile device that may be used within the network of Fig. 3.

### DETAILED DESCRIPTION

It is to be understood that the following disclosure provides many different embodiments, or examples, for implementing different features of the disclosure. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

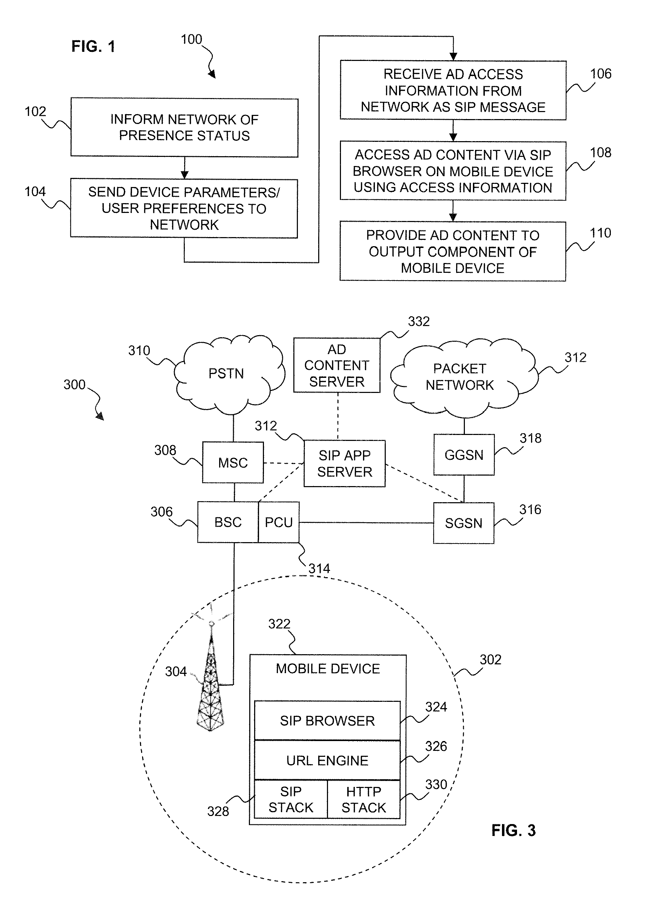

Referring to Fig. 1, in one embodiment, a method 100 may be used to control the reception of dynamic information such as advertising content on a mobile device. Although the present disclosure is described in terms of advertising information, it is understood that the methods and systems disclosed herein may be used to push any kind of information to a mobile device, including severe weather alerts or any other information to which a user is subscribed or otherwise prepared to receive via his or her mobile device. Accordingly, music lists, address and other contact information, local event information, and virtually any other data may be supplied to a mobile device using aspects of the present disclosure.

Mobile devices such as cellular handsets are ubiquitous in today's society, being carried by many users of all ages almost continuously. However, there are few or no advertisements being displayed on such mobile devices. Some mobile devices include a browser or similar user interface that may be capable of fetching a web page with advertisements to display to a user. However, with such devices, it is generally the user who has to use the browser to fetch the advertisement from a web server. The user interaction required by this process, as well as the relatively limited usage of browsers on mobile devices, hinders the ability of advertisers to display advertisements to mobile device users. Furthermore, as mobile devices are primarily used for voice communications such as voice calls and voice conferencing, it may be difficult to display dynamic advertisements to users using different formats.

In the present embodiment, the mobile device includes a Session Initiation Protocol (SIP) based browser that is, for example, an integrated HyperText Transfer Protocol (HTTP)/SIP client residing on the mobile device. One example of such a SIP browser is described in previously incorporated U.S. Patent Application Serial No. 11/270,966. SIP provides a signaling mechanism for the browser and the browser renders information such as HyperText Markup Language (HTML), Extensible Markup Language (XML), and/or Uniform Resource Locators (URLs) received via the SIP signaling messages. Voice calling and voice conferencing are two widely used applications on mobile devices and provide a means for delivering advertising content to a mobile device. The SIP browser, when used for voice calling or conferencing applications, may change the user interface of the application dynamically to provide advertising capabilities.

Accordingly, in step 102, the mobile device may inform a communications network (described later in greater detail) of the mobile device's status. For example, the mobile device's SIP browser may register the status information with the network periodically via SIP messaging. The status information may indicate many different states. For example, the status information may indicate the status of the mobile device as online (e.g., communicating with the network) but not available to receive advertisements, online and available to receive advertisements, do not disturb, offline (even if online), away, busy, etc. Accordingly, a user of the mobile device may control the mobile device's presence on the network by altering its status. In some embodiments, the mobile device may have a default status (e.g., online and available to receive advertisements) and may register the default status with the network unless the user overrides the default status.

In step 104, the mobile device may send device parameters and/or user preferences to the network. The device parameters may include such information as the model number of the mobile device. As mobile devices are increasingly targeted towards a particular customer segment (e.g., business people or young people), the model number may provide insight about the mobile device's user to advertisers. The model number or other technical parameters may also provide advertisers with information on the type of advertising content to serve, such as color pictures or plain text, audio, video, etc. The device parameters may also include location information, which may be useful for location specific advertising (e.g., nearby restaurants). The location information may be based on Global Positioning Satellites (GPS) if sent by the mobile device, or may be obtained from a radio tower or other network elements servicing the mobile device.

User preferences may include whether the user is interested in general advertisements or specified categories (e.g., restaurants around the user's office building). User preferences may also include times at which the mobile device is to receive advertising content (e.g., weekdays from 8:00 AM to 6:00 PM) and may even specify different types of advertising content to be received at different times. The mobile device's SIP browser may relay such preferences to the network.

In step 106, the mobile device may receive access information from the network via SIP messaging. The access information may be a URL embedded in a SIP message, or may be the actual advertising content. If a URL, the SIP browser may access advertising content located at the embedded URL in step 108. If the actual advertising content is embedded in the SIP message, the SIP browser may retrieve the advertising content from the message in step 108. In step 110, the SIP browser may provide the advertising content to the user via one or more output components (e.g., a screen and/or speaker) of the mobile device.

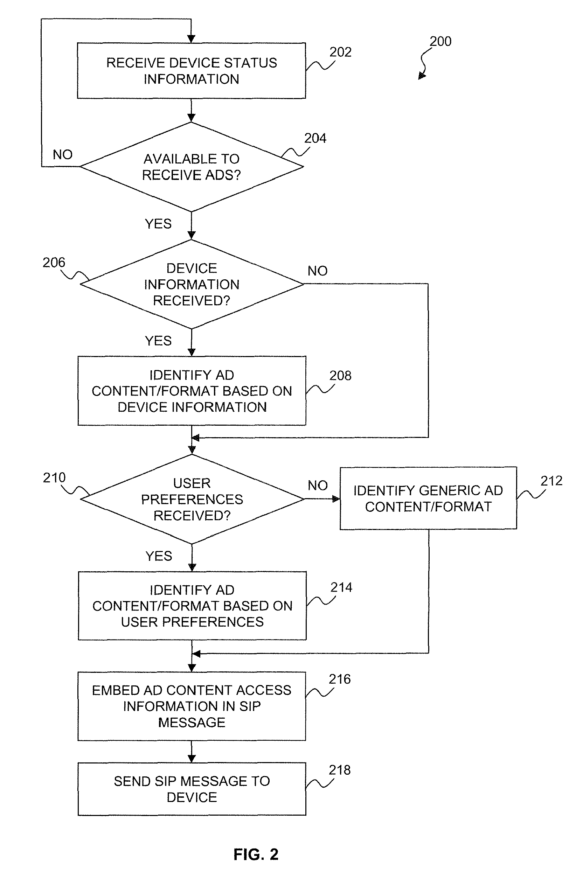

Referring to Fig. 2, in another embodiment, a method 200 may be used to control the delivery of advertising content from a communications network to a mobile device. The contents may be delivered to the mobile device via SIP signaling.

In step 202, one or more elements of a communications network (described later in greater detail) receives status information corresponding to a mobile device. As described with respect to Fig. 1, the status information may be received from the mobile device via SIP messaging and may indicate many different states of the mobile device. In step 204, a determination may be made using the status information as to whether the mobile device is available to receive advertising content. If not, the method 200 may return to step 202.

If the status information indicates that the mobile device is available to receive advertising content, the method 200 continues to step 206, where a determination may be made as to whether information about the mobile device (e.g., device parameters as described with respect to the method 100 of Fig. 1) have been received. If no device parameters have been received, the method 200 moves to step 210. If device parameters have been received, the method 200 moves to step 208, where advertising content and/or advertising formats may be identified using the device parameters.

In step 210, a determination may be made as to whether user preferences (e.g., user preferences as described with respect to the method 100 of Fig. 1) have been received. If no user preferences have been received (and no device parameters were received in step 206), the method 200 moves to step 212, where generic advertising content and/or formats may be selected. For example, if no mobile device parameters or user preferences have been received, the advertiser may not know the capabilities of the mobile device and may have no way to identify information in which the mobile device's user may be interested. Therefore, the advertiser may opt to select a text message or an audio recording that is likely to be handled properly by a wide variety of mobile devices and may have relatively broad appeal to users of different demographics. If user preferences have been received, the method 200 moves to step 214, where advertising content and/or advertising formats may be identified using the user preferences.

In step 216, the advertising content or access information linking to the advertising content may be embedded in a SIP message. In step 218, the SIP message may be sent to the mobile device. As the user interface provided by the SIP browser is dynamic, it is understood that different advertising content and/or formats may be sent to a mobile device based on the time of day or other criterion. the advertising content is selected according to the device information and/or the at least one user preference.

Referring to Fig. 3, one embodiment of a portion of a wireless network 300 in which the method 200 of Fig. 2 may be implemented is illustrated. In the present example, the network 300 is based on Global System for Mobile communication (GSM) technology, but it is understood that the present disclosure may be implemented in any wireless network. For example, the present disclosure may be implemented in networks using Code Division Multiple Access (CDMA) technologies (including evolution data-only (EV-DO) architectures) based on Interim Standard 95 (IS-95), Interim Standard 2000 (IS-2000) and Universal Mobile Telecommunications System (UMTS). The network 400 may represent other technologies, including Orthogonal Frequency Division Multiplexing (OFDM). Furthermore, the network 400 may be a packet-based wireless network. Accordingly, it is understood that the methods of the present disclosure may be performed in networks based on different technologies and that the example of a GSM network is for purposes of illustration only.

The network 300 comprises a plurality of cells, such as cell 302. It is understood that the cell may represent any subdivision (e.g., a cell, sector, or other network segment) of a wireless network. In the present example, the network 300 may be connected to other wireless and/or wireline networks, such as Public Switched Telephone Network 310 and packet network 312 (which may be any combination of private and public networks based on any packet technology, such as the Internet Protocol (IP) and the Transport Control Protocol (TCP). Cell 302 includes base transceiver station (BTS) 304 that is coupled to base station controller (BSC) 306. A mobile switching center (MSC) 308 may be used to connect the network 300 with other networks, such as PSTN 310. Although not shown, the BSC 306 may be coupled to multiple BTSes, and the MSC 308 may be coupled to other BSCs.

The BSC 306 may include or be coupled to a Packet Control Unit (PCU) 314 that may be configured to handle packet data for the BSC and to couple the GSM portion of the network 300 with a General Packet Radio Service (GPRS) portion for data packets. The terms "packet" and "packet data", as used in the present disclosure, may be interchangeable and may include any type of encapsulated data, including datagrams, frames, packets, and the like, and the encapsulated information may include voice, video, data, and/or other encapsulated information. The PCU 314 may be coupled to a Serving GPRS Support Node (SGSN) 316 that is coupled to the packet network 312 via a Gateway GPRS Support Node (GGSN) 318. In the present example, a SIP application server 320 may be coupled to one or more of the network entities as illustrated.

The SIP application server 320 may provide the capability to embed HTML or URLs in SIP messages. As described previously, a SIP browser on a mobile device may then display the HTML or fetch advertising content identified by the URL and display the content to the user. In the present example, the SIP application server 320 resides in the network 300, but it is understood that it may be located elsewhere (e.g., at an advertiser's place of business but coupled to the network 300). The SIP application server 320 may be controlled to dynamically change the advertisements served to a mobile device based on device parameters and user preferences, local time and local events such as concerts in a particular region, and/or other criterion. It is understood that some or all of the functionality of described with respect to Fig. 2 may be provided by the SIP application server 320, or some functionality may be provided by other network elements. For example, in other embodiments, functionality provided by the SIP application server 320 may be included in an existing network entity, such as the BSC 306 or MSC 308. In still other embodiments, functionality provided by the SIP application server 320 may be distributed among multiple network elements. In the present example, an advertisement content server 332 may be coupled to the SIP application server 320 and/or other network entities of the network 300 and may host and serve the actual content for the advertisements.

A mobile device 322 may communicate with the network 300 via the BTS 304 when positioned in the cell 302 (or in another cell associated with the network 300). In the present example, the mobile device 322 is a mobile telephone, but it is understood that the mobile device may be any device capable of wirelessly communicating with a network, and such devices may include personal digital assistants, personal computers (e.g., laptops), and/or pagers. The mobile device 322 may include a SIP stack 328, an HTTP stack 330, a SIP browser 324, and a URL engine 326 that serves as an interface between the SIP stack and the SIP browser. For example, the URL engine 326 may fetch data from a URL received in a SIP message on the SIP stack 328. HTML or other information received from the URL may be rendered by the SIP browser 324.

Although not shown, it is understood that some or all entities of the network 300 may include one or more processors, memories, and other components that enable the entities to receive, store, retrieve, process, and transmit instructions and data over wireless and/or wireline communication links. Furthermore, at least some functionality of an entity may be distributed and located elsewhere, either within a cell or outside of a cell. Repeaters (not shown) may be used to extend the range of the BTS 304.

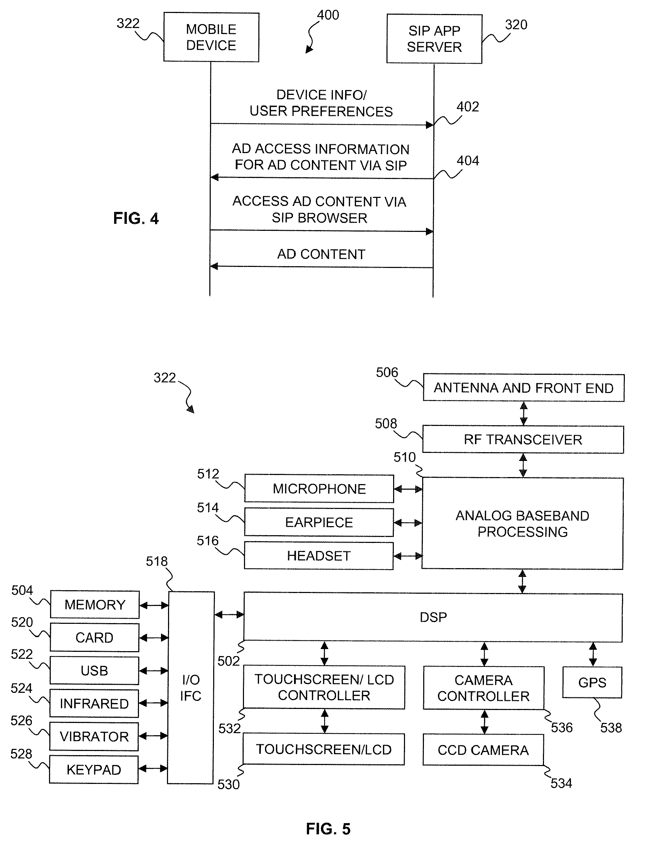

Referring to Fig. 4, in yet another embodiment, a sequence diagram 400 illustrates SIP messaging that may occur between the mobile device 322 and the SIP application server 320 of Fig. 3. Although the SIP application server is illustrated in the present example as performing various functions, it is understood that some or all of the functions may be provided by other network elements. For example, advertising content may not be located on the SIP application server 320, but may be located on the advertising content server 332, in which case the SIP application server 320 and/or the mobile device 322 may access the advertising content server 332 to retrieve the advertising content.

In step 402, device information and/or user preferences may be sent from the mobile device 322 to the SIP application server 320. The device information and/or user preferences may include status information, or the status information may be sent separately. In step 404, the SIP application server 320 sends access information to the mobile device 322 which, in the present example, includes a URL identifying the location of advertising content. In step 406, the mobile device 322 accesses the advertising content, although it is understood that the advertising content may be located elsewhere (e.g., on a separate server such as the advertising content server 332). In step 408, the SIP application server 320 sends the advertising content to the mobile device 322. If the advertising content is located elsewhere, such as on the advertising content server 332, the SIP application server 320 may retrieve the advertising content, process it to generate a SIP message containing the advertising content, and then send the advertising content in step 408.

Referring to Fig. 5, a block diagram illustrates one embodiment of the mobile device 322 of Fig. 3 in greater detail. The mobile device 322 includes a digital signal processor (DSP) 502 and a memory 504. As shown, the mobile device 322 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, an infrared port 524, a vibrator 526, a keypad 528, a touch screen liquid crystal display (LCD) with a touch sensitive surface 530, a touch screen/LCD controller 532, a charge-coupled device (CCD) camera 534, a camera controller 536, and a global positioning system (GPS) sensor 538.

The DSP 502 or some other form of controller or central processing unit operates to control the various components of the mobile device 322 in accordance with embedded software or firmware stored in memory 504. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the mobile device 322 to send and receive information from a cellular network or some other available wireless communications network. The RF transceiver 508 provides frequency shifting, converting received RF signals to baseband and converting baseband transmit signals to RF. The analog baseband processing unit 510 may provide channel equalization and signal demodulation to extract information from received signals, may modulate information to create transmit signals, and may provide analog filtering for audio signals. To that end, the analog baseband processing unit 510 may have ports for connecting to the built-in microphone 512 and the earpiece speaker 514 that enable the mobile device 322 to be used as a cell phone. The analog baseband processing unit 510 may further include a port for connecting to a headset or other hands-free microphone and speaker configuration.

The DSP 502 may send and receive digital communications with a wireless network via the analog baseband processing unit 510. In some embodiments, these digital communications may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the infrared port 524. The USB interface 522 may enable the mobile device 322 to function as a peripheral device to exchange information with a personal computer or other computer system. The infrared port 524 and other optional ports such as a Bluetooth interface or an IEEE 802.11 compliant wireless interface may enable the mobile device 322 to communicate wirelessly with other nearby mobile devices and/or wireless base stations.

The input/output interface 518 may further connect the DSP 502 to the vibrator 526 that, when triggered, causes the mobile device 322 to vibrate. The vibrator 526 may serve as a mechanism for silently alerting the user to any of various events such as an incoming call, a new text message, and an appointment reminder.

The keypad 528 couples to the DSP 502 via the interface 518 to provide one mechanism for the user to make selections, enter information, and otherwise provide input to the mobile device 322. Another input mechanism may be the touch screen LCD 530, which may also display text and/or graphics to the user. The touch screen LCD controller 532 couples the DSP 502 to the touch screen LCD 530.

The CCD camera 534 enables the mobile device 322 to take digital pictures. The DSP 502 communicates with the CCD camera 534 via the camera controller 536. The GPS sensor 538 is coupled to the DSP 502 to decode global positioning system signals, thereby enabling the mobile device 322 to determine its position. Various other peripherals may also be included to provide additional functions, e.g., radio and television reception.

It is understood that the mobile device 322 may include a plurality of executable instructions, including instructions for device management. Accordingly, various aspects of the methods of the preceding embodiments may be executed by the mobile device 322.

Although only a few exemplary embodiments of this disclosure have been described in details above, those skilled in the art will readily appreciate that many modifications are possible in the exemplary embodiments without materially departing from the novel teachings and advantages of this disclosure. Also, features illustrated and discussed above with respect to some embodiments can be combined with features illustrated and discussed above with respect to other embodiments. Accordingly, all such modifications are intended to be included within the scope of this disclosure.

## Claims

1. A method for receiving information in mobile device, the method comprising:
informing a network, by a mobile device, of a status information of the mobile device, wherein the status information indicates whether the mobile device is possible to receive information;
sending device information including at least one device parameter of the mobile device to the network;
receiving access information from the network in a Session Initiation Protocol (SIP) message, wherein the access information corresponds to information content according to the device information;
accessing the information content via the access information; and
providing the information content to an output component of the mobile device.

2. The method of claim 1 wherein accessing the information content via the access information includes accessing a uniform resource locator embedded in the SIP message.

3. The method of claim 1 wherein providing the information content to an output component of the mobile device includes displaying the information content on a screen of the device.

4. The method of claim 1 wherein providing the information content to an output component of the mobile device includes playing the information content on a speaker

5. The method of claim 1 further comprising sending at least one user preference to the network, wherein the information content is selected according to the device information or the at least one user preference.

6. The method of claim 5 wherein the at least one user preference includes a time period during which the mobile device is to receive the information content.

7. The method of claim 5 wherein the at least one user preference includes a type of the information content.

8. The method of claim 1 wherein the device information includes location information identifying a location of the mobile device to the network, wherein the location information is based on Global Positioning Satellite (GPS) information obtained by the mobile device.

9. The method of claim 1 to claim 8 wherein the information content is one of advertising content, weather information content and address information content.

10. A system for transmitting information to mobile device, the system comprising;
a mobile device for sending status information indicating whether the mobile device is possible to receive a information and device information including at least one device parameter of the mobile device to Session Initiation Protocol(SIP) application server, receiving access information from the SIP application server in a SIP message, wherein the access information correspond to information content according to the device information, accessing the information content via the access information, and providing the information content to an output component of the mobile device; and the SIP application server identifying the information content to send to the mobile device according to the device information when the status information indicates the mobile device is possible to receive a information, embedding the access information for the information content in the SIP message, and sending the SIP message to the mobile device.

11. The system of claim 10, wherein the mobile device sends at least one user preference to the SIP application server, and the SIP application server selects the information content according to the device information or the at least one user preference.

12. The system of claim 11, wherein the access information includes the information content or a Uniform Resource Locator(URL) corresponding to the information content.

13. the system of claim 12, the mobile device having:
a wireless network interface;
a processor coupled to the wireless network interface; and
a memory coupled to the processor and configured to store a plurality of instructions for use by the processor, including:
instructions for a SIP browser;
instructions for a SIP stack for handling SIP messages;
instructions for a URL engine positioned between the SIP browser and SIP stack and configured to translate URLs received by the SIP stack for the SIP browser;
instructions for informing a network of a presence status of the mobile device via the wireless network interface;
instructions for receiving access information for advertising content from the network embedded in a SIP message;
instructions for using the SIP browser to access the advertising content via the access information; and
instructions for providing the advertising content to an output component.
